(19) **Europäisches Patentamt / European Patent Office / Office européen des brevets**

(11) **EP 3 041 689 B1**

(12) **EUROPEAN PATENT SPECIFICATION**

(45) Date of publication and mention of the grant of the patent:
**24.07.2019 Bulletin 2019/30**

(21) Application number: **14790316.5**

(22) Date of filing: **03.09.2014**

(51) Int Cl.:
*B29D 30/54* (2006.01)     *B60C 1/00* (2006.01)
*C09J 11/06* (2006.01)     *C09J 107/00* (2006.01)
*C09J 121/02* (2006.01)

(86) International application number:
**PCT/IB2014/064237**

(87) International publication number:
**WO 2015/033285 (12.03.2015 Gazette 2015/10)**

(54) **METHOD OF JOINING TWO RUBBER TYRE PORTIONS**

VERFAHREN ZUM VERBINDEN VON ZWEI GUMMIREIFENTEILEN

PROCÉDÉ DE RACCORDEMENT DE DEUX PARTIES DE PNEU EN CAOUTCHOUC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.09.2013 IT RM20130491**

(43) Date of publication of application:
**13.07.2016 Bulletin 2016/28**

(73) Proprietor: **Bridgestone Corporation Tokyo 104-8340 (JP)**

(72) Inventors:
• **COTUGNO, Salvatore**
  **I-00131 Roma (IT)**
• **DE LUCA, Francesco**
  **I-00128 Roma (IT)**

• **CALIANO, Ludovica**
  **I-00128 Roma (IT)**

(74) Representative: **Marchetti, Alessio**
  **Bridgestone Technical Center Europe S.p.A.**
  **Via Fosso del Salceto, 13/15**
  **00128 Roma (IT)**

(56) References cited:
EP-A1- 1 757 658     EP-A1- 2 223 928
EP-A1- 2 604 650     EP-A1- 2 620 296
EP-A2- 0 298 704     EP-A2- 0 461 463
WO-A2-2009/071562     JP-A- 2002 226 812
JP-A- 2008 308 615     US-A- 4 497 927
US-A- 5 322 886     US-A- 5 922 797
US-A1- 2009 099 281     US-A1- 2010 326 576

**Description**

TECHNICAL FIELD

The present invention relates to a method of joining two rubber tyre portions.

BACKGROUND ART

Adhesive compounds, known as cements, used in tyre manufacturing are normally organic-solvent-based. Adhesive compounds of this sort are highly adhesive and extremely easy to use, mainly due to the ability of rubber to dissolve in organic solvents and so merge with other rubber into practically one piece once the organic solvent evaporates.

For environmental reasons, recent European directives have drastically limited the use of organic solvents in the tyre industry, thus forcing manufacturers to find alternative solutions capable of ensuring firm adhesion of rubber layers.

One solution, considered for some time now, is to use water-based adhesive compounds.

For these to be feasible, it is necessary to ensure dispersion and stability of the various compound ingredients in the water solvent.

This is normally done using emulsifiers capable of dispersing at least some of the compound ingredients. One of the problems of water-based compounds, however, is the large amount of emulsifier often required. In fact, tests show that using large amounts or different types of emulsifiers in water-based adhesive compounds may impair the adhesive power of the compound.

A water-based adhesive compound emulsifier is therefore needed, which can be used in small amounts, while at the same time ensuring adhesion comparable with, if not superior to, corresponding solvent-based adhesive compounds.

The Applicant has surprisingly discovered that emulsifiers with specific chemical/physical characteristics satisfy the above requirements.

Here and hereinafter, CMC is intended to mean the critical micelle concentration value of an emulsifier, measured in water, at 25°C, at atmospheric pressure.

Here and hereinafter, HLB is intended to mean the hydrophilic-hydrophobic balance index of an emulsifier according to equation (I) in "J. T. Davies, A quantitative kinetic theory of emulsion type, I, Physical chemistry of the emulsifying agent. Proceedings of 2nd International Congress Surface/Activity, Butterworths, London 1957"

$$HLB = 7 + m * Hh - n * Hl \qquad (I)$$

where :

    m is the number of hydrophilic groups in the molecule;
    Hh is the hydrophilic group value;
    N is the number of lipophilic groups;
    Hl is the lipophilic group value.

JP2002226812A discloses an adhesion treatment agent for carbon fibers comprising 100 parts.wt. of a rubber latex and 0.1-5 parts.wt of a ligninosulfonate. This carbon fiber for rubber reinforcement is obtained by coating the surface of carbon fiber with the adhesion treatment agent.

US5322886 discloses a process for the polymerization of chloroprene in the absence of carboxylic soaps, to prepare latexes which are stable on storage and resistant to polyvalent metal ions.

US4497927 describes a tire tread adhesive or cement having superior green tack, excellent cured adhesion, and rapid drying time is disclosed. The tread cement comprises a water-in-oil emulsion having an oil continuous phase in which is dissolved a vulcanizable rubber compound. The water-in-oil emulsion tread adhesive may contain from 20-80% water, thereby minimizing environmental contamination on drying.

US2010/326576 A1 describes a water-base adhesive mix for producing tyres, having, by weight, 5 to 80% water, 10 to 60% of a cross-linkable unsaturated-chain polymer base, 0.2 to 1% sulphur, 0.1 to 3% zinc oxide, 0.1 to 1% of accelerating agents, 0.1 to 15% of emulsifiers, and 0.01 to 30% of a carbon black having -ArAy type functional surface groups, where: Ar is an aromatic radical from the group including phenyl, naphthyl, anthracenyl, phenanthrenyl, biphenyl and pyridinyl; A is a COO- or SO3- functional group; y is a whole number from 1 to 5 when Ar is phenyl, from 1 to 7 when Ar is naphthyl, from 1 to 9 when Ar is anthracenyl, phenanthrenyl or byphenyl, and from 1 to 4 when Ar is pyridinyl.

US5922797 A describes a latex useful for adhering synthetic fibers to rubber. The latex is comprised of (a) water, (b) an emulsifier and (c) a polymer which is comprised of repeat units which are derived from (i) a conjugated diolefin monomer, (ii) a vinyl aromatic monomer, (iii) 2-vinylpyridine and (iv) a vinyl aldehyde monomer.

DISCLOSURE OF INVENTION

According to the present invention, there is provided a method of joining two rubber tyre portions, the method comprising applying a water-based adhesive compound to at least one surface of one of the two portions; and joining said two rubber portions; said water-based adhesive compound comprising water as a solvent, a cross-linkable, unsaturated-chain polymer base, and an emulsifier with a CMC value of 0.1 to 12 mmol/L, and an HLB value of 1 to 45; said method being characterized in that said emulsifier is of the general formula (I) or general formula (II):

$$(R_1COO)_n{}^{n-}X^{n+} \qquad (I)$$

where :

R$_1$ is a straight or branched aliphatic hydrocarbon chain containing 10 to 25 carbon atoms and at least one unsaturation;
n is 1 or 2; and
X is a metal cation;

$$(R_1SO_3)_n{}^{n-}X^{n+} \qquad (II)$$

where :

R$_1$ is a straight or branched aliphatic hydrocarbon chain containing 10 to 25 carbon atoms and at least one unsaturation;
n is 1 or 2; and
X is a metal cation..

Preferably, the emulsifier of general formula (I) has a CMC value of 0.1 to 2 mmol/L, and an HLB value of 1 to 20.
Preferably, said emulsifier is sodium oleate.
Preferably, the emulsifier of general formula (II) has a CMC value of 0.1 to 2 mmol/L, and an HLB value of 21 to 45.
Preferably, said emulsifier is sodium dodecylbenzenesulphonate or sodium lignosulphonate.
Preferably, the adhesive compound contains 0.1 to 5 phr of said emulsifier.
Preferably, said water-based adhesive compound comprises an alkylphenol formaldehyde resin and the alkylphenol making up the resin is p-phenol-2-pentyl-2,4,4-trimethyl.

BEST MODE FOR CARRYING OUT THE INVENTION

The following are non-limiting examples for a clearer understanding of the invention.

EXAMPLES

Three water-based adhesive compounds according to the present invention (A, B, C), and differing as to the emulsifier used, were prepared.
Water-based compounds A-C were prepared by simultaneously dispersing all the ingredients shown in enough water to disperse them homogenously. The resulting aqueous solution was agitated mechanically for 30 minutes and then sonicated for 15 minutes to obtain an aqueous dispersion.
The above process of producing the aqueous dispersions in no way constitutes a limitation of the present invention.
For comparison purposes, a solvent-based adhesive compound (D) was produced comprising the same composition in phr as the above compounds, except for, obviously, the emulsifiers.
Table I shows the compositions of adhesive compounds A-D and the water or organic solvent weight percentages.

3

TABLE I

| | | A | B | C | D |
|---|---|---|---|---|---|
| solvent % | | 55 water | 55 water | 55 water | 30 n-heptane |
| Composition in phr | Natural rubber | 100 | | | |
| | Resin | 20 | | | |
| | Carbon black | 10 | | | |
| | ZnO | 3 | | | |
| | Sulphur | 2.7 | | | |
| | Accelerant | 1.4 | | | |
| | Emulsifier (a) | 1.1 | -- | -- | -- |
| | Emulsifier (b) | -- | 1.1 | -- | -- |
| | Emulsifier (c) | -- | -- | 1.1 | -- |
| Emulsifier (a) is sodium oleate. Emulsifier (b) is sodium dodecylbenzenesulphonate. Emulsifier (c) is sodium lignosulphonate. | | | | | |

The resin used is in the alkylphenol-formaldehyde class marketed by the SI Group company under the trade name HRJ-16231, and in which the alkylphenol making up the resin is p-phenol-2-pentyl-2,4,4-trimethyl.

The accelerant used is MBTS.

Another three water-based adhesive compounds (E, F, G) were prepared according to the present invention and using the same procedure as indicated above for compounds A-C, but differing from compounds A-C mainly by having no curing system.

Table II shows the compositions of adhesive compounds E-G and the water weight percentages.

TABLE II

| | | E | F | G |
|---|---|---|---|---|
| solvent % | | 55 water | 55 water | 55 water |
| Composition in phr | Natural Rubber | 100 | | |
| | Resin | 10 | | |
| | Carbon Black | 2 | | |
| | ZnO | -- | | |
| | Sulphur | -- | | |
| | Accelerant | -- | | |
| | Emulsifier (a) | 0.19 | -- | -- |
| | Emulsifier (b) | -- | 0.19 | -- |
| | Emulsifier (c) | -- | -- | 0.19 |

In addition to natural rubber, the adhesive compounds according to the present invention may comprise any cross-linkable-chain polymer base obtained by polymerization of conjugate dienes and/or aliphatic or aromatic vinyl monomers. For example, the polymer bases that may be used are selected from the group comprising natural rubber; 1,4-cis polyisoprene; polybutadiene; isoprene-isobutene copolymers, possibly halogenated; butadiene-acrylonitrile copolymers; styrene-butadiene copolymers; styrene-butadiene-isoprene terpolymers, in solution or emulsion; and ethylene-propylene-diene terpolymers. The above polymer bases may be used on their own or mixed.

Laboratory tests

Adhesive compounds A-G were all adhesion tested under the same test conditions. More specifically, each adhesive compound was used to join a rubber tyre-retread portion to a rubber portion of the tyre for retreading.

Each compound was applied to one surface of one of the portions to be joined, and allowed to dry before joining the two portions.

More specifically, 25°C grip of a green tyre-retread portion to the cured portion of the tyre for retreading was tack tested to determine the characteristics of the tyre being retreaded; and grip of a cured tyre-retread portion to the cured portion of the retreaded tyre was peel tested to determine the characteristics of the end product, i.e. the retreaded tyre.

The adhesion test results are shown in Tables III and IV.

TABLE III

|  | A | B | C | D |
|---|---|---|---|---|
| Tack (gr) | 1613 | 1159 | 904 | 1131 |
| Peeling (N/mm) | 23.1 | 15.6 | 17.6 | 30.55 |

TABLE IV

|  | E | F | G |
|---|---|---|---|
| Tack (gr) | 1791 | 1368 | 1539 |
| Peeling (N/mm) | 18.6 | 20.5 | 20.7 |

Tables III and IV clearly show the comparable or superior adhesive power of the water-based adhesive compounds according to the invention with respect to the solvent-based control adhesive compound.

In other words, using emulsifiers with specific chemical/physical characteristics, the water-based adhesive compounds according to the invention provide for joining rubber portions as effectively as, if not better than, corresponding solvent-based adhesive compounds.

**Claims**

1. A method of joining two rubber tyre portions, the method comprising applying a water-based adhesive compound to at least one surface of one of the two portions; and joining said two rubber portions; said water-based adhesive compound comprising water as a solvent, a cross-linkable, unsaturated-chain polymer base, and an emulsifier with a CMC value of 0.1 to 12 mmol/L, and an HLB value of 1 to 45; said method being **characterized in that** said emulsifier is of general formula (I) or general formula (II):

$$(R_1COO)_n^{n-}X^{n+} \qquad (I)$$

where :

$R_1$ is a straight or branched aliphatic hydrocarbon chain containing 10 to 25 carbon atoms and at least one unsaturation;
n is 1 or 2; and
X is a metal cation;

$$(R_1SO_3)_n^{n-}X^{n+} \qquad (II)$$

where :

$R_1$ is a straight or branched aliphatic hydrocarbon chain containing 10 to 25 carbon atoms and at least one unsaturation;

n is 1 or 2; and

X is a metal cation.

**2.** A method of joining two rubber tyre portions, as claimed in Claim 1, **characterized in that** said emulsifier of the general formula (I) has a CMC value of 0.1 to 2 mmol/L, and an HLB value of 1 to 20.

**3.** A method of joining two rubber tyre portions, as claimed in Claim 2, **characterized in that** said emulsifier is sodium oleate.

**4.** A method of joining two rubber tyre portions, as claimed in Claim 1, **characterized in that** said emulsifier of the general formula (II) has a CMC value of 0.1 to 2 mmol/L, and an HLB value of 21 to 45.

**5.** A method of joining two rubber tyre portions, as claimed in Claim 4, **characterized in that** said emulsifier is sodium dodecylbenzenesulphonate or sodium lignosulphonate.

**6.** A method of joining two rubber tyre portions, as claimed in one of the foregoing Claims, **characterized in that** the adhesive compound contains 0.1 to 5 phr of said emulsifier.

**7.** A method of joining two rubber tyre portions, as claimed in one of the foregoing Claims, **characterized in that** said water-based adhesive compound comprises an alkylphenol formaldehyde resin; the alkylphenol making up the resin being p-phenol-2-pentyl-2,4,4-trimethyl.

**Patentansprüche**

**1.** Verfahren zum Verbinden von zwei Gummireifenabschnitten, wobei das Verfahren das Auftragen einer wasserbasierten Klebstoffverbindung auf mindestens eine Oberfläche einer der beiden Abschnitte; und das Verbinden der beiden Gummiabschnitte umfasst; wobei die wasserbasierte Klebstoffverbindung Wasser als Lösungsmittel, eine vernetzbare ungesättigte Polymerkettenbasis und einen Emulgator mit einem CMC-Wert von 0,1 bis 12 mmol/l und einem HLB-Wert von 1 bis 45 umfasst; wobei das Verfahren **dadurch gekennzeichnet ist, dass** der Emulgator die allgemeine Formel (I) oder die allgemeine Formel (II) aufweist:

$$(R_1COO)_n{}^{n\text{-}}X^{n+} \qquad (I)$$

worin:

R$_1$ eine geradkettige oder verzweigtkettige aliphatische Kohlenwasserstoffkette ist, die 10 bis 25 Kohlenstoffatome und mindestens eine Ungesättigtheit enthält;

n 1 oder 2 ist; und

X ein Metallkation ist;

$$(R_1SO_3)_n{}^{n\text{-}}X^{n+} \qquad (II)$$

worin:

R$_1$ eine geradkettige oder verzweigtkettige aliphatische Kohlenwasserstoffkette ist, die 10 bis 25 Kohlenstoffatome und mindestens eine Ungesättigtheit enthält;

n 1 oder 2 ist; und

X ein Metallkation ist.

**2.** Verfahren zum Verbinden von zwei Gummireifenabschnitten, wie in Anspruch 1 beansprucht, **dadurch gekennzeichnet, dass** der Emulgator der allgemeinen Formel (I) einen CMC-Wert von 0,1 bis 2 mmol/l und einen HLB-Wert von 1 bis 20 aufweist.

**3.** Verfahren zum Verbinden von zwei Gummireifenabschnitten, wie in Anspruch 2 beansprucht, **dadurch gekenn-**

**zeichnet, dass** der Emulgator Natriumoleat ist.

4. Verfahren zum Verbinden von zwei Gummireifenabschnitten, wie in Anspruch 1 beansprucht, **dadurch gekennzeichnet, dass** der Emulgator der allgemeinen Formel (II) einen CMC-Wert von 0,1 bis 2 mmol/l und einen HLB-Wert von 21 bis 45 aufweist.

5. Verfahren zum Verbinden von zwei Gummireifenabschnitten, wie in Anspruch 4 beansprucht, **dadurch gekennzeichnet, dass** der Emulgator Natriumdodecylbenzolsulfonat oder Natriumligninsulfonat ist.

6. Verfahren zum Verbinden von zwei Gummireifenabschnitten, wie in einem der vorstehenden Ansprüche beansprucht, **dadurch gekennzeichnet, dass** die Klebstoffverbindung zu 0,1 bis 5 phr den Emulgator umfasst.

7. Verfahren zum Verbinden von zwei Gummireifenabschnitten, wie in einem der vorstehenden Ansprüche beansprucht, **dadurch gekennzeichnet, dass** die wasserbasierten Klebstoffverbindung ein Alkylphenol-Formaldehydharz umfasst; wobei das das Harz bildende Alkylphenol p-Phenol-2-pentyl-2,4,4-trimethyl ist.

## Revendications

1. Procédé de raccordement de deux parties de pneumatique en caoutchouc, le procédé comprenant l'application d'un composé adhésif à base d'eau à au moins une surface de l'une des deux parties ; et le raccordement desdites deux parties en caoutchouc ; ledit composé adhésif à base d'eau comprenant de l'eau en guise de solvant, une base polymère réticulable à chaîne insaturée et un émulsifiant avec une valeur CMC (concentration micellaire critique) de 0,1 à 12 mmol/L et une valeur HLB (rapport hydro-lipophile) de 1 à 45 ; ledit procédé étant **caractérisé en ce que** ledit émulsifiant est de formule générale (I) ou de formule générale (II) :

$$(R_1COO)_n{}^{n-}X^{n+} \qquad (I)$$

où :

R$_1$ est une chaîne hydrocarbonée aliphatique linéaire ou ramifiée contenant 10 à 25 atomes de carbone et au moins une insaturation ;
n vaut 1 ou 2 ; et
X est un cation métallique ;

$$(R_1SO_3)_n{}^{n-}X^{n+} \qquad (II)$$

où :

R$_1$ est une chaîne hydrocarbonée aliphatique linéaire ou ramifiée contenant 10 à 25 atomes de carbone et au moins une insaturation ;
n vaut 1 ou 2 ; et
X est un cation métallique.

2. Procédé de raccordement de deux parties de pneumatique en caoutchouc, selon la revendication 1, **caractérisé en ce que** ledit émulsifiant de formule générale (I) a une valeur CMC de 0,1 à 2 mmol/L et une valeur HLB de 1 à 20.

3. Procédé de raccordement de deux parties de pneumatique en caoutchouc, selon la revendication 2, **caractérisé en ce que** ledit émulsifiant est de l'oléate de sodium.

4. Procédé de raccordement de deux parties de pneumatique en caoutchouc, selon la revendication 1, **caractérisé en ce que** ledit émulsifiant de formule générale (II) a une valeur CMC de 0,1 à 2 mmol/L et une valeur HLB de 21 à 45.

5. Procédé de raccordement de deux parties de pneumatique en caoutchouc, selon la revendication 4, **caractérisé en ce que** ledit émulsifiant est du dodécylbenzènesulfonate de sodium ou du lignosulfonate de sodium.

6. Procédé de raccordement de deux parties de pneumatique en caoutchouc, selon l'une des revendications qui précèdent, **caractérisé en ce que** le composé adhésif contient 0,1 à 5 pcc dudit émulsifiant.

7. Procédé de raccordement de deux parties de pneumatique en caoutchouc, selon l'une des revendications qui précèdent, **caractérisé en ce que** ledit composé adhésif à base d'eau comprend une résine d'alkylphénol formaldéhyde ; l'alkylphénol constituant la résine étant du p-phénol-2-pentyl-2,4,4-triméthyle.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002226812 A
- US 5322886 A
- US 4497927 A
- US 2010326576 A1
- US 5922797 A

**Non-patent literature cited in the description**

- A quantitative kinetic theory of emulsion type, I, Physical chemistry of the emulsifying agent. **J. T. DAVIES.** Proceedings of 2nd International Congress Surface/Activity. Butterworths, 1957